(19) Europäisches Patentamt
European Patent Office
Office européen des brevets

(11) EP 2 447 953 A1

(12) # EUROPEAN PATENT APPLICATION
published in accordance with Art. 153(4) EPC

(43) Date of publication:
**02.05.2012 Bulletin 2012/18**

(21) Application number: **10792080.3**

(22) Date of filing: **22.06.2010**

(51) Int Cl.:
***H01B 1/06*** (2006.01) ***B01J 39/12*** (2006.01)
***B01J 39/20*** (2006.01) ***B01J 47/12*** (2006.01)
***C08K 3/08*** (2006.01) ***C08L 101/02*** (2006.01)
***C08L 101/12*** (2006.01) ***C25B 13/08*** (2006.01)
***H01M 4/86*** (2006.01) ***H01M 8/02*** (2006.01)
***H01M 8/10*** (2006.01)

(86) International application number:
**PCT/JP2010/060505**

(87) International publication number:
**WO 2010/150762 (29.12.2010 Gazette 2010/52)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **24.06.2009 JP 2009149664**

(71) Applicant: **Toyo Boseki Kabushiki Kaisha**
**Osaka-shi, Osaka 530-8230 (JP)**

(72) Inventors:
- **AKASHI, Mayumi**
  **Ohtsu-shi**
  **Shiga 520-0292 (JP)**
- **NAKASE,Katsuki**
  **Ohtsu-shi**
  **Shiga 520-0292 (JP)**
- **KOUYAMA,Haruhiko**
  **Ohtsu-shi**
  **Shiga 520-0292 (JP)**

(74) Representative: **Müller-Boré & Partner Patentanwälte**
**Grafinger Straße 2**
**81671 München (DE)**

(54) **SOLID POLYMER ELECTROLYTE COMPOSITION, ION-EXCHANGE MEMBRANE, MEMBRANE ELECTRODE ASSEMBLY, AND FUEL CELL**

(57) To provide a solid polymer electrolyte composition that can improve oxidation resistance without causing decrease in proton conductivity, elution of added components and the like, and an ion-exchange membrane, a membrane electrode assembly and a fuel cell, each using the composition. It is possible to obtain a solid polymer electrolyte composition having excellent oxidation resistance without causing decrease in proton conductivity, elution of added components and the like, by mixing an aromatic hydrocarbon-based polymer electrolyte, a phosphorus-containing polymer compound and a metallic element.

EP 2 447 953 A1

**Description**

TECHNICAL FIELD

The present invention relates to a solid polymer electrolyte composition having excellent durability, and an ion-exchange membrane, a membrane electrode assembly and a fuel cell, each using the electrolyte composition.

BACKGROUND ART

Recently, novel power-generating technologies excellent in energy efficiency and environment friendliness have been attracting a great deal of attention. In particular, a solid polymer type fuel cell using a polymer solid electrolyte membrane has a feature that it is easy to start and stop because of high energy density and low operating temperature as compared with other types of fuel cells. Therefore, progress has been made in the development of the solid polymer type fuel cell as a power supply unit of an electric vehicle, distributed power generation and the like.

A proton-conductive ion-exchange membrane is usually used as the polymer solid electrolyte membrane. It is required for the polymer solid electrolyte membrane to have, in addition to proton conductivity, characteristics such as fuel permeation suppression properties for prevention of permeation of hydrogen or the like as a fuel, and mechanical strength. There has been known, as such a polymer solid electrolyte membrane, a membrane containing a perfluorocarbonsulfonic acid polymer having a sulfonic acid group introduced therein, for example, NAFION® manufactured by DuPont (U.S.A.).

While a perfluorocarbonsulfonic acid-based ion-exchange membrane exhibits well-balanced characteristics as an electrolyte membrane of a fuel cell, a membrane more excellent in costs and performance has been required. A fluorine-based ion-exchange membrane such as a perfluorocarbonsulfonic acid-based ion-exchange membrane has a problem that harmful hydrofluoric acid may be mixed in an exhaust gas depending on the operation conditions when used in a fuel cell, and that large environmental burden is applied at the time of disposal. Therefore, a hydrocarbon-based ion-exchange membrane is now being developed intensively.

On the other hand, in a fuel cell using hydrogen as a fuel, radicals are generated by a side reaction, and thus causing decomposition of an ion-exchange membrane. The hydrocarbon-based ion-exchange membrane has a problem that it has poor radical resistance as compared with the perfluorocarbonsulfonic acid-based ion-exchange membrane. The reason for the poor oxidation resistance is considered that a hydrocarbon compound commonly has poor durability to radicals and an electrolyte including hydrocarbon skeletons is likely to cause a degradation reaction due to radicals (oxidation reaction due to a peroxide radical).

Therefore, various methods have been proposed for the purpose of providing a highly durable solid polymer electrolyte, that has oxidation resistance, being equal to or more than that of a fluorine-based electrolyte or being practically sufficient, and also can be produced at low costs. Among these proposed methods, a method of improving durability by adding additives to a polymer electrolyte can be applied even to existing polymer electrolytes and is an effective method as a convenient method. There have hitherto been proposed highly durable solid polymer electrolytes (Patent Literatures 1 and 2 described hereinafter) that are made of a polymer compound containing a hydrocarbon moiety and a functional group containing phosphorus introduced therein, and highly durable solid polymer electrolyte compositions (Patent Literatures 3 and 4 described hereinafter) obtained by mixing a polymer compound having an electrolyte group and a hydrocarbon moiety, and a phosphorus-containing polymer compound.

However, the method of introducing a functional group containing phosphorus has a drawback that polymerization of an electrolyte polymer becomes complicated and the structure of an applicable electrolyte polymer is limited. In the method of mixing the polymer compound having an electrolyte group and a hydrocarbon moiety with a phosphorus-containing polymer compound, the phosphorus-containing polymer compound may be eluted under operation conditions of a fuel cell.

A method using a water-insoluble compound has been conceived as a method of suppressing elution of the phosphorus-containing polymer compound, and an aromatic-based polymer compound having a functional group containing phosphorus introduced therein has been proposed as the water-insoluble phosphorus-containing polymer compound (Patent Literatures 5 and 6 described hereinafter). However, in these cases, because of low density of phosphorus in the polymer compound containing phosphorus, it is required to add a large amount of the phosphorus-containing polymer compound so as to obtain sufficient oxidation resistance. Therefore, decrease in proton conductivity and an increase in costs is concerned.

It has also been known that phosphoric acid reacts with various metals to form insoluble or hardly soluble salts. Application of an invention of a complex of a hydrocarbon-based solid polymer electrolyte and a zirconium phosphonate compound having a chelating functional group, as a solid polymer electrolyte composition having excellent oxidation resistance, has been filed (Patent Literature 7 described hereinafter). Solubility of a chelating functional group with a phosphonic acid group in water decreases when combined with Zr to form a complex. However, the solubility does not

sufficiently decrease. Since the chelating functional group with a phosphonic acid group entraps metal ions serving as a catalyst for decomposition of a peroxide to improve oxidation resistance, durability to peroxide radicals is not sufficient.

CITATION LIST

PATENT LITERATURE

PTL 1: Japanese Patent Laying-Open No. 2000-11755
PTL 2: Japanese Patent Laying-Open No. 2004-79252
PTL 3: Japanese Patent Laying-Open No. 2000-11756
PTL 4: Japanese Patent Laying-Open No. 2004-134269
PTL 5: Japanese Patent Laying-Open No. 2003-238678
PTL 6: Japanese Patent Laying-Open No. 2004-175997
PTL 7: Japanese Patent Laying-Open No. 2002-343132

SUMMARY OF INVENTION

TECHNICAL PROBLEM

In light of the problems of the prior art, the present invention has been made and an object thereof is to provide a solid polymer electrolyte composition having excellent durability, that can improve oxidation resistance without causing decrease in proton conductivity, elution of added components and the like, and an ion-exchange membrane, a membrane electrode assembly and a fuel cell, each using the electrolyte composition.

SOLUTION TO PROBLEM

A gist of the solid polymer electrolyte composition according to the present invention lies in inclusion of 90 to 99.95 parts by mass of an aromatic hydrocarbon-based polymer electrolyte, 0.05 to 10 parts by mass of a phosphorus-containing polymer compound and 10 to 5,000 ppm of a metallic element, and the present inventors have found that the above-mentioned object can be achieved by this electrolyte composition, and thus completed the present invention.

In the present invention, the aromatic hydrocarbon-based polymer electrolyte means those having a main structure composed mainly of an aromatic hydrocarbon-based polymer that may contain heteroatoms such as an oxygen atom, a sulfur atom and a nitrogen atom, and having acidic ionic groups such as a sulfonic acid group, a phosphonic acid group, a sulfonimide group, a phosphoric acid group and a carboxyl group. The aromatic hydrocarbon-based polymer electrolyte is preferably a block copolymer including a hydrophilic segment and a hydrophobic segment since it has low swellability in hot water and high durability even in case of a high ion exchange capacity.

Various compounds having a trivalent functional group containing phosphorus and/or a pentavalent functional group containing phosphorus are included in the phosphorus-containing polymer compound. The phosphorus-containing polymer compound is preferably a compound having a phosphonic acid group. Among the phosphorus-containing polymer compounds, an alkylphosphonic acid-based compound is particularly preferable. In addition, polyvinyl phosphonic acid is preferably exemplified.

The metallic element is desirably a metallic element that interacts with a P-OH structure, or a P-OH structure and an S-OH structure, thereby making the phosphorus-containing polymer compound insoluble or hardly soluble in water, and examples thereof include alkali earth metals, transition metals, and rare earth elements. In particular, Mg, Ca, Co, Ni, Zn, Sr, Zr, Ba and Ce are preferable.

In the present invention, since a functional group containing phosphorus is introduced in an aromatic hydrocarbon-based polymer electrolyte, an oxidation degradation reaction of the polymer electrolyte is suppressed by the functional group containing phosphorus. Furthermore, elution of the phosphorus-containing polymer compound can be suppressed by the addition of the metallic element. Whereby, it becomes possible to obtain a solid polymer electrolyte composition having practically sufficient oxidation resistance.

ADVANTAGEOUS EFFECTS OF INVENTION

The solid polymer electrolyte composition according to the present invention has the effect of suppressing elution of a phosphorus-containing polymer compound and allowing oxidation resistance to last for a long time by inclusion of an aromatic hydrocarbon-based polymer electrolyte, a phosphorus-containing polymer compound and a metallic

element.

DESCRIPTION OF EMBODIMENTS

Embodiments of the present invention will be described in detail below. The solid polymer electrolyte composition having excellent durability according to the present invention is obtained by mixing an aromatic hydrocarbon-based polymer electrolyte, a phosphorus-containing polymer compound and a metallic element.

The aromatic hydrocarbon-based polymer electrolyte in the present invention must have an ion exchange capacity within a range of 0.5 to 3.0 meq/g, and preferably has an ion exchange capacity within a range of 1.0 to 2.5 meq/g.

The aromatic hydrocarbon-based polymer electrolyte means those having a main structure composed mainly of an aromatic hydrocarbon-based polymer that may contain heteroatoms such as an oxygen atom, a sulfur atom and a nitrogen atom, and having acidic ionic groups such as a sulfonic acid group, a phosphonic acid group, a sulfonimide group, a phosphoric acid group and a carboxyl group. The ionic group is preferably a strong acid group such as a sulfonic acid group or a sulfonimide group since proton conductivity increases. A phosphonic acid group and a phosphoric acid group are preferable since proton conductivity is exhibited even in a state of high temperature and low humidity.

The aromatic hydrocarbon-based polymer electrolyte in the present invention is a polymer electrolyte containing one or more kinds of polymers, having one or more kinds of structures selected from the structure represented by Chemical Formula 1 shown below, and one or more kinds of structures selected from the structure represented by Chemical Formula 2 shown below. In Chemical Formulas 1 and 2, X represents a $-S(=O)_2-$ group or a -C(=O)- group, Y represents H or a monovalent cation, $Ar^1$ represents one or more kinds of aromatic groups each having an electron withdrawing group, $Z^1$ represents either an oxygen atom or a sulfur atom, and Ar represents one or more kinds of groups selected from the group consisting of a divalent aromatic group and a divalent aliphatic group, respectively.

[Chemical Formula 2]

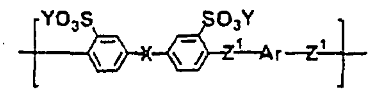

(Chemical Formula 1)

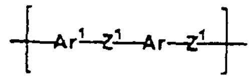

(Chemical Formula 2)

The aromatic hydrocarbon-based polymer electrolyte in the present invention may include a plurality of structures within the scope of the structures represented by Chemical Formula 1 or 2. There is no particular limitation on the binding mode of the structure represented by Chemical Formula 1 and the structure represented by Chemical Formula 2, and these structures may be bound at random. Alternatively, it may be a mode in which either of the structures represented by Chemical Formula 1 and Chemical Formula 2 are continuously arranged to form a block structure, a mode in which a block composed of continuous structures represented by Chemical Formula 1 and a block structure composed of continuous structures represented by Chemical Formula 2 are bound, or a mode in which the structure represented by Chemical Formula 1 and the structure represented by Chemical Formula 2 are alternately bound. The aromatic hydrocarbon-based polymer electrolyte preferably has a block structure since swellability in hot water is suppressed and durability is excellent even in case of increasing the ion exchange capacity so as to obtain high proton conductivity.

There is no particular limitation on the molecular weight when a block structure is employed in Chemical Formula 1 and Chemical Formula 2, and the number average molecular weight of Chemical Formulas 1 and 2 is 1,000 or more and 50,000 or less, and more preferably 3,000 or more and 20,000 or less.

It is preferable that X in Chemical Formula 1 is a $-S(=O)_2-$ group since solubility in a solvent is improved. It is preferable that X is a -C(=O)- group since bondability with an electrode can be enhanced by lowering a softening temperature of a polymer and photocrosslinkability can be imparted to an electrolyte membrane. When used as a polymer electrolyte membrane, Y is preferably a H atom. When Y is a H atom, the polymer electrolyte membrane is likely to be decomposed by heat or the like. Therefore, in case of processing such as production of an electrolyte membrane, Y is set as an alkali metal salt ofNa or K and, after processing, Y is converted into a H atom by an acid treatment, and thus a polymer electrolyte membrane can be obtained. It is preferable that $Z^1$ is O since there is an advantage that a polymer causes less coloration and a raw material is easily available. It is preferable that $Z^1$ is S since oxidation resistance is improved.

Ar in Chemical Formulas 1 and 2 is at least one group selected from the group consisting of a divalent aromatic group and a divalent aliphatic group. Examples of Ar include, but are not limited to, aromatic rings such as a benzene ring and a pyridine ring; condensed polycyclic aromatic groups such as a naphthalene ring and an anthracene ring; groups in which a plurality of aromatic groups are linked through a direct bond, an aliphatic group, a sulfone group, an ether group, a sulfide group, a perfluoroalkyl group, and an aliphatic group containing an aromatic group; aliphatic groups; and aliphatic groups containing an aromatic group. Ar in Chemical Formulas 1 and 2 may be composed of a plurality of structures.

Examples of Ar in Chemical Formulas 1 and 2 include, but are not limited to, the followings.

[Chemical Formula 3]

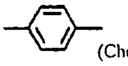 (Chemical Formula 3A) 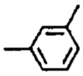 (Chemical Formula 3B) 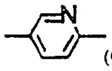 (Chemical Formula 3C)

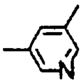 (Chemical Formula 3D) 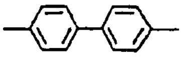 (Chemical Formula 3E)

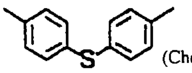 (Chemical Formula 3F) 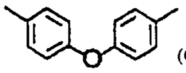 (Chemical Formula 3G)

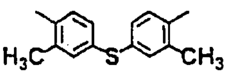 (Chemical Formula 3H) 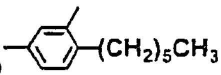 (Chemical Formula 3I)

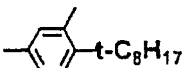 (Chemical Formula 3J) 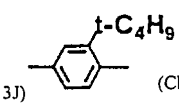 (Chemical Formula 3K)

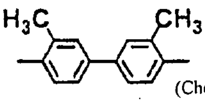 (Chemical Formula 3L) 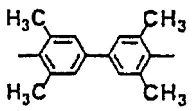 (Chemical Formula 3M)

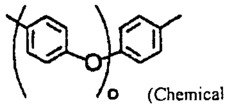 (Chemical Formula 3N) 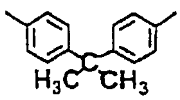 (Chemical Formula 3O)

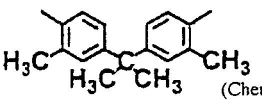 (Chemical Formula 3P) 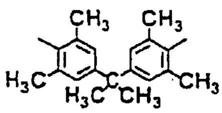 (Chemical Formula 3Q)

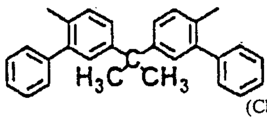 (Chemical Formula 3R) 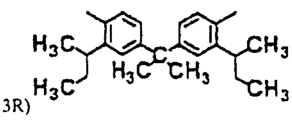 (Chemical Formula 3S)

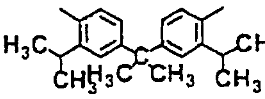 (Chemical Formula 3T) 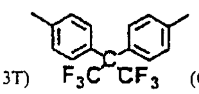 (Chemical Formula 3U)

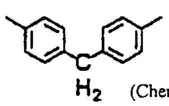 (Chemical Formula 3V) 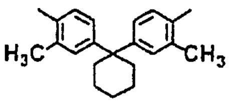 (Chemical Formula 3W)

[Chemical Formula 4]

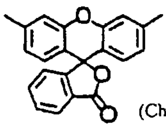 (Chemical Formula 3X)

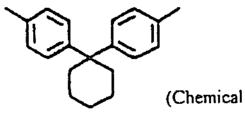 (Chemical Formula 3Y)

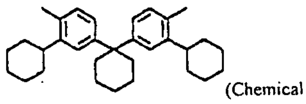 (Chemical Formula 3Z)

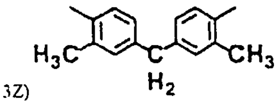 (Chemical Formula 3AA)

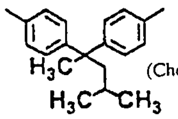 (Chemical Formula 3AB)

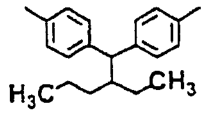 (Chemical Formula 3AC)

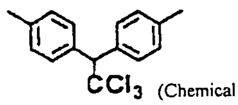 (Chemical Formula 3AD)

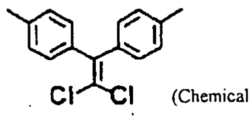 (Chemical Formula 3AE)

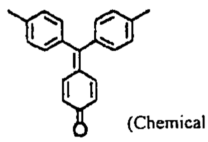 (Chemical Formula 3AF)

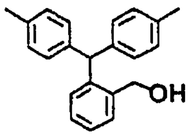 (Chemical Formula 3AG)

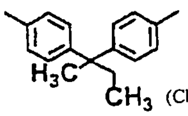 (Chemical Formula 3AH)

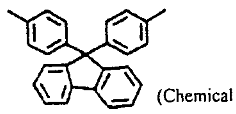 (Chemical Formula 3AI)

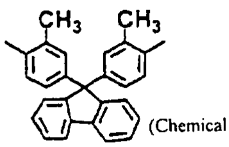 (Chemical Formula 3AJ)

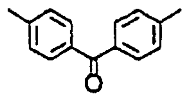 (Chemical Formula 3AK)

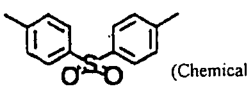 (Chemical Formula 3AL)

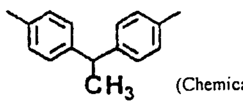 (Chemical Formula 3AM)

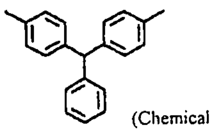 (Chemical Formula 3AN)

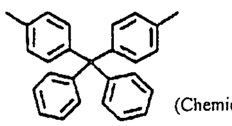 (Chemical Formula 3AO)

[Chemical Formula 5]

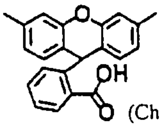 (Chemical Formula 3AP) 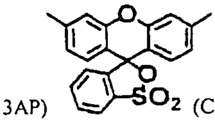 (Chemical Formula 3AQ)

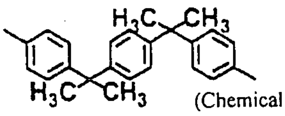 (Chemical Formula 3AR) 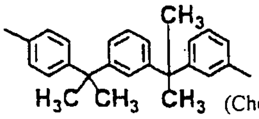 (Chemical Formula 3AS)

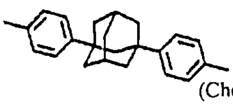 (Chemical Formula 3AT) 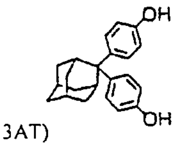 (Chemical Formula 3AU)

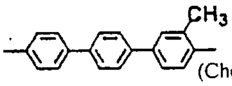 (Chemical Formula 3AV) 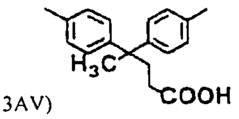 (Chemical Formula 3AW)

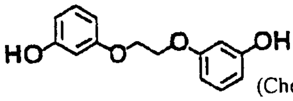 (Chemical Formula 3AX) 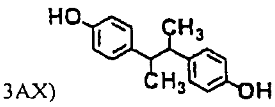 (Chemical Formula 3AY)

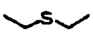 (Chemical Formula 3AZ) 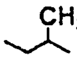 (Chemical Formula 3BA)

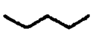 (Chemical Formula 3BB) 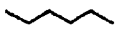 (Chemical Formula 3BC) 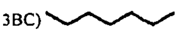 (Chemical Formula 3BD)

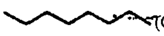 (Chemical Formula 3BE) 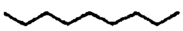 (Chemical Formula 3BF)

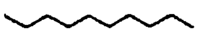 (Chemical Formula 3BG) 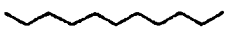 (Chemical Formula 3BH)

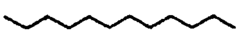 (Chemical Formula 3BI) 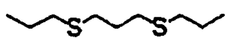 (Chemical Formula 3BJ)

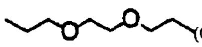 (Chemical Formula 3BK) 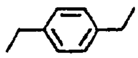 (Chemical Formula 3BL)

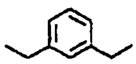 (Chemical Formula 3BM) $-(CH_2)_2-$ (Chemical Formula 3BN)

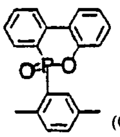 (Chemical Formula 3BO) 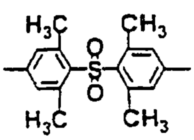 (Chemical Formula 3BP)

Among the above-mentioned structures mentioned as examples of Ar in Chemical Formulas 1 and 2, the structures of Chemical Formulas 3E and 3AV are preferable since swelling of a polymer electrolyte membrane is suppressed. The structures of Chemical Formulas 3F, 3G, 3N, 3O, 3U and 3Y are preferable since a softening temperature of a polymer electrolyte membrane is lowered, resulting in an improvement of bondability with an electrode catalyst layer. The structures represented by Chemical Formulas 3AX and 3AY are also preferable since a softening temperature of a polymer electrolyte membrane is lowered, resulting in an improvement of bondability with an electrode catalyst layer. Furthermore, the structures represented by Chemical Formulas 3AY to 3BN are preferable since bondability with an electrode catalyst layer is improved and durability is also improved. The structures represented by Chemical Formulas 3AO, 3AI, 3AN, 3AQ and 3X are preferable since methanol permeability is suppressed. The structures represented by Chemical Formulas 3I, 3J and 3K are preferable since flooding in a fuel cell is suppressed. The structure represented by Chemical Formula 3BO is preferable since durability of a polymer electrolyte membrane is improved. In case where

Ar has the structure represented by any of Chemical Formulas 3AY to 3BN, $Z^1$ in Chemical Formulas 1 and 2 is preferably a sulfur atom. o in Chemical Formula 3N represents an integer of 2 to 10.

Ar in Chemical Formulas 1 and 2 may be composed of a plurality of groups, and examples of preferable combinations include a combination of the structure represented by Chemical Formula 3E and one or more kinds of structures selected from the group consisting of the structures represented by Chemical Formulas 3F, 3G, 3N, 30, 3U, 3Y, 3AX, 3AY and 3AY to 3BN; a combination of one or more kinds of structures selected from the group consisting of the structures represented by Chemical Formulas 3F, 3G, 3N, 30, 3U and 3Y and one or more kinds of structures selected from the group consisting of the structures represented by 3AY to 3BN; and a combination of one or more kinds of structures selected from the group consisting of the structures represented by Chemical Formulas 3AO, 3AI, 3AN, 3AQ and 3X and one or more kinds of structures selected from the group consisting of the structures represented by 3AY to 3BN. It is also possible to obtain the flooding suppressing effect by the preferable structures or by further combining the preferable structures with Chemical Formulas 3I, 3J and 3K, and to obtain the durability improving effect by further combining the structure represented by Chemical Formula 3BO, respectively.

$Ar^1$ in Chemical Formula 2 is preferably a divalent aromatic group having an electron withdrawing group. Examples of the electron withdrawing group include, but are not limited to, a sulfone group, a sulfonyl group, a sulfonic acid group, a sulfonic acid ester group, a sulfonic acid amide group, a sulfonic acid imide group, a carboxyl group, a carbonyl group, a carboxylic acid ester group, a cyano group, a halogen group, a trifluoromethyl group and a nitro group, and the electron withdrawing group may be any known electron withdrawing group.

Examples of the structure of $Ar^1$ in Chemical Formula 2 include, but are not limited to, the followings.

[Chemical Formula 6]

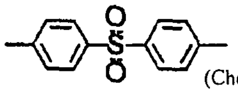 (Chemical Formula 4A) 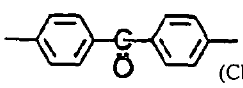 (Chemical Formula 4B)

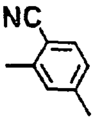 (Chemical Formula 4C) 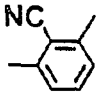 (Chemical Formula 4D)

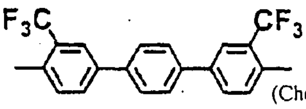 (Chemical Formula 4E) 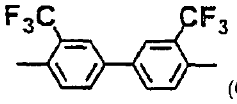 (Chemical Formula 4F)

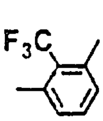 (Chemical Formula 4G) 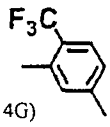 (Chemical Formula 4H) 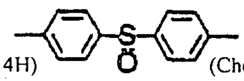 (Chemical Formula 4I)

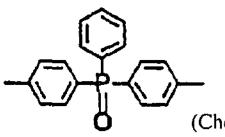 (Chemical Formula 4J) 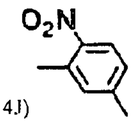 (Chemical Formula 4K) 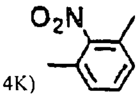 (Chemical Formula 4L)

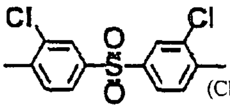 (Chemical Formula 4M) 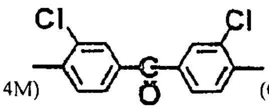 (Chemical Formula 4N)

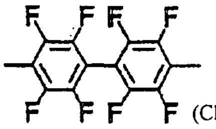 (Chemical Formula 4O) 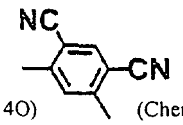 (Chemical Formula 4P)

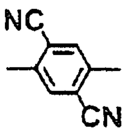 (Chemical Formula 4Q)

Preferable structures of $Ar^1$ in Chemical Formula 2 include the structures represented by Chemical Formulas 4A to 4D. Among these structures, the structures represented by Chemical Formulas 4C and 4D are more preferable, and the structure represented by Chemical Formula 4D is still more preferable. The structure of Chemical Formula 4A is preferable since solubility of a polymer can be increased. The structure of Chemical Formula 4B is preferable since bondability with an electrode is enhanced by lowering a softening temperature of a polymer, and photocrosslinkability is imparted. The structures of Chemical Formula 4C or 4D is preferable since swelling of a polymer can be reduced, and the structure of Chemical Formula 4D is more preferable. $Ar^1$ in Chemical Formula 2 may be composed of a plurality of structures. When it is composed of a plurality of structures, a combination of two or more kinds of structures selected from the group consisting of Chemical Formulas 4A to 4D, and a combination of one or more kinds of structures selected from the group consisting of Chemical Formulas 4A to 4D and one or more kinds of structures selected from the group consisting of Chemical Formulas 4E to 4Q are preferable.

The polymer constituting the polymer electrolyte in the present invention can be polymerized through an aromatic nucleophilic substitution reaction by heating one or more kinds of compounds selected from the group consisting of an aromatic dihalogen compound and an aromatic dinitro compound each activated with an electron withdrawing group, and one or more kinds of compounds selected from the group consisting of a bisphenol compound, a bisthiophenol compound and an alkyldithiol compound in the presence of a basic compound.

It is possible to adjust the polymerization degree of the obtained polymer by controlling the molar ratio of a

reactive halogen group or nitro group to a reactive hydroxy group or mercapto group in a monomer to any molar ratio. The molar ratio is preferably 0.8 to 1.2, more preferably 0.9 to 1.1, and still more preferably 0.95 to 1.05. When the molar ratio is 1, a polymer with the highest polymerization degree can be obtained.

Examples of those having an ionic group among aromatic dihalogen compounds activated with an electron withdrawing group include 3,3'-disulfo-4,4'-dichlorodiphenyl sulfone, 3,3'-disulfo-4,4'-difluorodiphenyl sulfone, 3,3'-disulfo-4,4'-dichlorodiphenyl ketone, 3,3'-disulfo-4,4'-difluorodiphenyl sulfone, and those in which a sulfonic acid group is converted into a salt with a monovalent cation species. The monovalent cation species may be metal species such as sodium and potassium, or various amines, and are not limited thereto. Examples of the compound in which the sulfonic acid group is converted into a salt include 3,3'-sodium disulfonate-4,4'-dichlorodiphenyl sulfone, 3,3'-sodium disulfonate-4,4'-difluorodiphenyl sulfone, 3,3'-sodium disulfonate-4,4'-dichlorodiphenyl ketone, 3,3'-sodium disulfonate-4,4'-difluorodiphenyl sulfone, 3,3'-sodium disulfonate-4,4'-difluorodiphenyl ketone, 3,3'-potassium disulfonate-4,4'-dichlorodiphenyl sulfone, 3,3'-potassium disulfonate-4,4'-difluorodiphenyl sulfone, 3,3'-potassium disulfonate-4,4'-dichlorodiphenyl ketone, 3,3'-potassium disulfonate-4,4'-difluorodiphenyl sulfone and 3,3'-potassium disulfonate-4,4'-difluorodiphenyl ketone. Among these, 3,3'-sodium disulfonate-4,4'-dichlorodiphenyl sulfone and 3,3'-sodium disulfonate-4,4'-difluorodiphenyl sulfone are preferable.

Examples of the activated aromatic dihalogen compound having no ionic group include, but are not limited to, 2,6-dichlorobenzonitrile, 2,4-dichlorobenzonitrile, 2,6-difluorobenzonitrile, 2,4-difluorobenzonitrile, 4,4'-dichlorodiphenyl sulfone, 4,4'-difluorodiphenyl sulfone, 4,4'-difluorobenzophenone, 4,4'-dichlorobenzophenone, decafluorobiphenyl, 3,3'-bis(trifluoromethyl)-4,4'-dichlorobiphenyl, and 3,3'-bis(trifluoromethyl)-p-terphenyl. It is also possible to use other aromatic dihalogen compounds, aromatic dinitro compounds and aromatic dicyano compounds, each having activity with an aromatic nucleophilic substitution reaction. Among these compounds, 2,6-dichlorobenzonitrile, 2,4-dichlorobenzonitrile, 2,6-difluorobenzonitrile and 2,4-difluorobenzonitrile are preferable, and 2,6-dichlorobenzonitrile and 2,6-difluorobenzonitrile are more preferable.

Examples of the bisphenol compound or bisthiophenol compound include, but are not limited to, 9,9-bis(4-hydroxyphenyl)fluorene, 9,9-bis(3-methyl-4-hydroxyphenyl)fluorene, 4,4'-biphenol, 4,4'-dimercaptobiphenyl, bis(4-hydroxyphenyl)sulfone, 1,1-bis(4-hydroxyphenyl)ethane, 2,2-bis(4-hydroxyphenyl)propane, bis(4-hydroxyphenyl)methane, 2,2-bis(4-hydroxyphenyl)butane, 3,3-bis(4-hydroxyphenyl)pentane, 2,2-bis(4-hydroxy-3,5-dimethylphenyl)propane, bis(4-hydroxy-3,5-dimethylphenyl)methane, bis(4-hydroxy-2,5-dimethylphenyl)methand, bis(4-hydroxyphenyl) phenylmethane, bis(4-hydroxyphenyl)diphenylmethane, 1,1-bis(4-hydroxyphenyl)cyclohexane, 4-hexylresorcinol, 2,2-bis(4-hydroxyphenyl)hexafluoropropane, hydroquinone, resorcin, bis(4-hydroxyphenyl)ketone, 4,4'-thiodiphenol, 4,4'-oxydiphenol, 1,3-bis(4-hydroxyphenyl)adamantane, 2.2-bis(4-hydroxyphenyl)adamantane, 4,4'-thiobisbenzenethiol, 1,3-benzenedithiol, 1,4-benzenedithiol, 10-(2,5-dihydroxyphenyl)-9,10-dihydro-9-oxa-10-phosphaphenanthrene-10-oxide, 4,4'-biphenol, 9,9-bis(4-hydroxyphenyl)fluorene, 1,3-bis(4-hydroxyphenyl)adamantane, 4,4'-thiodiphenol, 4,4'-oxydiphenol, 4,4'-thiobisbenzenethiol, 4-ethylresorcinol, 4-hexylresorcinol, 2-hexylhydroquinone, 2-octylhydroquinone, 2-octadecylhydroquinone, 2-tertiary-butylhydroquinone, 2,5-ditertiary-butylhydroquinone, 2,5-ditertiary-amylhydroquinone, 2,2'-dihexyl-4,4'-dihydroxybiphenyl, 1-octyl-2,6-dihydroxynaphthalene, and 2-hexyl-1,5-dihydroxynaphthalene. It is possible to use a compound which can react with the above-mentioned aromatic dihalogen compounds and aromatic dinitro compounds activated with an electron withdrawing group.

Examples of the alkyldithiol compound include, but are not limited to, 1,2-ethanedithiol, 1,3-propanedithiol, 1,2-propanedithiol, 1,4-butanedithiol, 2,3-dihydroxy-1,4-butanedithiol, 1,5-pentanedithiol, 1,6-hexanedithiol, 1,7-heptanedithiol, 1,8-octanedithiol, 1,9-nonanedithiol, 1,10-decanedithiol, 1,11-undecanedithiol, 1,12-dodecanedithiol, 1,13-tridecanedithiol, 1,14-tetradecanedithiol, 1,15-pentadecanedithiol, 1,16-hexadecanedithiol, 1,17-heptadecanedithiol, 1,18-octadecanedithiol, 1,19-nonadecanedithiol, 1,20-icosanedithiol, 3,6-dioxa-1,8-octanedithiol, 3,7-dithia-1,9-nonanedithiol, 3-thia-1,5-pentanedithiol, 2,3-dihydroxy-1,4-butanedithiol, 1,4-bis(mercaptomethyl)benzene, 1,3-bis(mercaptomethyl)benzene, and 1,2-bis(mercaptomethyl)benzene. It is possible to use a compound that can react with the above-mentioned aromatic dihalogen compound and aromatic dinitro compound activated with an electron withdrawing group.

The polymerization can be carried out at a temperature within a range of 0 to 350°C, and preferably 50 to 250°C. When the temperature is lower than 0°C, the reaction tends not to sufficiently proceed. In contrast, when the temperature is higher than 350°C, decomposition of a polymer tends to begin to occur. The reaction can also be carried out in the absence of a solvent, but is preferably carried out in a solvent. Examples of usable solvents include, but are not limited to, N-methyl-2-pyrrolidone, N,N-dimethylacetamide, N,N-dimethylformamide, dimethyl sulfoxide, diphenylsulfone, and sulfolane. It may be a solvent that can be used as a stable solvent in an aromatic nucleophilic substitution reaction. These organic solvents may be used alone, or used as a mixture of two or more kinds of them.

In the above-mentioned polymerization reaction, it is also possible to directly react a bisphenol compound, bisthiophenol compound or alkyldithiol compound carbamoylated through a reaction with an isocyanate compound such as phenyl isocyanate with an activated dihalogenaromatic compound or dinitroaromatic compound without using a basic compound.

Examples of the basic compound include sodium hydroxide, potassium hydroxide, sodium carbonate, potassium

carbonate, sodium hydrogen carbonate, and potassium hydrogen carbonate, and it is possible to use a basic compound that enables an aromatic diol and an aromatic dimercapto compound to have an active phenoxide structure without being limited thereto. When the basic compound is used in the amount of 100 mol% or more in terms of an alkali metal based on a hydroxyl group and a mercaptide group of a bisphenol compound, a bisthiophenol compound and an alkyldithiol compound, the polymerization can be satisfactorily carried out. The amount is preferably within a range of 105 to 125 mol% in terms of an alkali metal based on a hydroxyl group and a mercaptide group of a bisphenol compound, a bisthiophenol compound and an alkyldithiol compound. It is not preferable that the amount of the basic compound is too large since such an amount can cause a side reaction such as decomposition.

In the aromatic nucleophilic substitution reaction, water is sometimes formed as a by-product. In this case, regardless of a polymerization solvent, water can be removed out of the system as an azeotrope by allowing toluene or the like to coexist in the reaction system. In the method in which water is removed out of the system, a water absorbing material such as a molecular sieve can also be used. When the aromatic nucleophilic substitution reaction is carried out in a solvent, it is preferable to charge a monomer so that the concentration of the obtained polymer becomes 5 to 50% by weight. When the concentration is less than 5% by weight, the polymerization degree is less likely to increase. In contrast, when the concentration is more than 50% by weight, viscosity of the reaction system excessively increases and thus it may become difficult to carry out a post treatment of the reaction product. After completion of the polymerization reaction, the solvent is removed from the reaction solution by vaporization and the residue is optionally washed to obtain a desired polymer. It is also possible to obtain a polymer by adding the reaction solution in a solvent that hardly dissolves a polymer to precipitate the polymer as a solid, and collecting the precipitate through filtration. It is also possible to obtain a polymer solution by removing by-produced salts through filtration.

The solid polymer electrolyte of the present invention may have a block structure composed of continuous structures of either of the structures represented by Chemical Formula 1 and Chemical Formula 2, or a mode in which a block structure composed of continuous structures represented by Chemical Formula 1 and a block structure composed of continuous structures represented by Chemical Formula 2 are bound. There is no particular limitation on the method of forming a block structure. For example, the solid polymer electrolyte can be produced by reacting a polymer including a segment represented by Chemical Formula 1 in which both ends are hydroxy groups or halogeno groups, or one end is a hydroxy group and the other end is a halogeno group, and a polymer including a segment represented by Chemical Formula 2 in which both ends are hydroxy groups or halogeno groups, or one end is a hydroxy group and the other end is a halogeno group in combination.

Examples of the method include a. a method in which a polymer having a hydroxy group at both ends is condensed with a polymer having a halogeno group at both ends by an aromatic nucleophilic substitution reaction under the action of a base; b. a method in which a polymer having one hydroxy group and one halogeno group respectively at both ends is condensed with another polymer having one hydroxy group and one halogeno group respectively at both ends by an aromatic nucleophilic substitution reaction under the action of a base; c. a method in which a polymer having a hydroxy group at both ends is linked to another polymer having a hydroxy group at both ends using a compound serving as a linking group, such as 4,4'-difluorobenzophenone, decafluorobiphenyl, hexafluorobenzene or 4,4'-difluorodiphenyl sulfone; and d. a method in which a polymer having a halogeno group at both ends is linked to another polymer having a halogeno group at both ends using a compound serving as a linking group, such as 4,4'-dihydroxybiphenyl, bisphenol A, 4,4'-dihydroxybenzophenone or 4,4'-dihydroxydiphenylsulfone, or by a dehalogenation condensation reaction. It is also possible to use a method in which a polymer having a reactive group capable of causing the same elementary reaction as that described above and a monomer are allowed to undergo a polymerization reaction.

The aromatic hydrocarbon-based polymer electrolyte used in the composite polymer electrolyte membrane of the present invention preferably has a logarithmic viscosity, measured by the method described later, of 0.1 1 dL/g or more. In case the logarithmic viscosity is less than 0.1 dL/g, the polymer electrolyte is likely to become brittle when formed into the membrane. The logarithmic viscosity is more preferably 0.3 dL/g or more. In contrast, the logarithmic viscosity of more than 5 dL/g is not preferable since a problem of processability occurs, for example, it may become difficult to dissolve a polymer. It is commonly possible to use, as the solvent for the measurement of the logarithmic viscosity, polar organic solvents such as N-methyl pyrrolidone and N,N-dimethylacetamide. When the polymer has poor solubility in these solvents, the logarithmic viscosity can also be measured using concentrated sulfuric acid.

The thickness of the composite polymer electrolyte membrane in the present invention can be controlled to any thickness. However, when the thickness is 5 μm or less, it may become difficult to satisfy predetermined characteristics. Therefore, the thickness is preferably 5 μm or more, and more preferably 10 μm or more. When the thickness is 300 μm or more, it may become difficult to produce the membrane. Therefore, the thickness is preferably 300 μm or less.

The composite polymer electrolyte membrane composition in the present invention may contain other polymers. Examples of the polymers include, but are not limited to, polyesters such as polyethylene terephthalate, polybutylene terephthalate and polyethylene naphthalate; polyamides such as nylon 6, nylon 6,6, nylon 6,10 and nylon 12; acrylate-based resins such as polymethyl methacrylate, polymethacrylic acid esters, polymethyl acrylate and polyacrylic acid esters; polyacrylic acid-based resins; polymethacrylic acid-based resins; various polyolefins such as polyethylene, polypropylene, polystyrene and diene-based polymers; polyurethane-based resins; cellulose-based resins such as cellulose acetate and ethyl cellulose; aromatic-based polymers such as polyallylate, aramid, polycarbonate, polyphenylene sulfide, polyphenylene oxide, polysulfone, polyethersulfone, polyether ether ketone, polyetherimide, polyimide, polyamideimide, polybenzimidazole, polybenzoxazole and polybenzthiazole; and thermosetting resins such as an epoxy resin, a phenol resin, a novolak resin and a benzoxazine resin. Regarding a resin composition with basic polymers such as polybenzimidazole and polyvinyl pyridine, processability of the composition becomes more preferable when a sulfonic acid group is further introduced therein, that can be said to be a combination suited for the improvement of polymer dimensional stability. The polymer electrolyte membrane of the present invention preferably contains a proton conductive polymer in the amount of 50% by mass or more and less than 100% by mass, and more preferably 70% by mass or more and less than 100% by mass, based on the entire polymer electrolyte membrane. When the amount is less than 50% by weight, the concentration of the sulfonic acid group of the polymer electrolyte membrane decreases and thus satisfactory ionic conductivity may not be obtained. Also, a unit having the sulfonic acid group becomes a non-continuous phase and thus mobility of conducting ions tend to decrease. The polymer electrolyte membrane of the present invention may optionally contain various additives such as an antioxidant, a heat stabilizer, a lubricant, a tackifier, a plasticizer, a crosslinking agent, a viscosity adjustor, an antistatic agent, an antibacterial agent, a defoamer, a dispersing agent and a polymerization inhibitor as necessary.

In the present invention, the phosphorus-containing polymer compound means a polymer compound having a functional group containing phosphorus, and a polymer compound having a functional group containing phosphorus in the main chain or side chain falls under the phosphorus-containing polymer compound. Examples of the functional group containing phosphorus include a trivalent functional group containing phosphorus and a pentavalent functional group containing phosphorus, and both trivalent and pentavalent functional groups are included in the "functional group containing phosphorus" in the present invention. These functional groups containing phosphorus can be represented by the general formula shown in Chemical Formula 7 (trivalent functional group containing phosphorus), and Chemical Formula 8 (pentavalent functional group containing phosphorus).

[Chemical Formula 7]

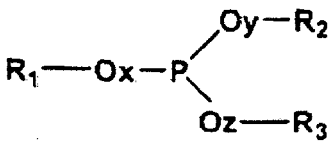

[Chemical Formula 8]

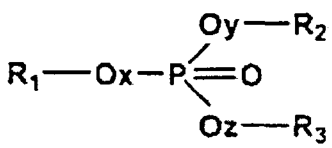

In the formula of Chemical Formula 7 and the formula of Chemical Formula 8, x, y and z take a value of 0 or 1. In the formula of Chemical Formula 7 and the formula of Chemical Formula 8, $R_1$ represents a linear, cyclic or branched hydrocarbon compound represented by the general formula $C_mH_n$, or $R_2$ and $R_3$ represent a halogen atom such as fluorine, chlorine or bromine, a hydrogen atom or a monovalent organic group. In the formula of Chemical Formula 7 and the formula of Chemical Formula 8, when y or z is 1, $R_2$ or $R_3$ may be a metal atom.

Specific examples of the functional group containing phosphorus include a phosphonic acid group, a phosphonic acid ester group, a phosphite group, phosphoric acid, and a phosphoric acid ester. Among these groups, a phosphonic acid group is inexpensive and can impart high oxidation resistance to a polymer compound having a hydrocarbon moiety, and is therefore particularly suited as a functional group containing phosphorus.

Specific examples of the phosphorus-containing polymer compound include polyvinyl phosphonic acid, a copolymer containing polyvinyl phosphonic acid, a polyethersulfone resin having a phosphonic acid group or the like introduced therein, a polyether ether ketone resin, a linear phenol-formaldehyde resin, a crosslinking phenol-formaldehyde resin, a linear polystyrene resin, a crosslinking polystyrene resin, a linear poly(trifluorostyrene) resin, a crosslinking (trifluorostyrene) resin, a poly(2,3-diphenyl-1,4-phenylene oxide) resin, a poly(aryl ether ketone) resin, a poly(arylene ether sulfone) resin, a poly(phenylquinoxaline) resin, a poly(benzylsilane) resin, a polystyrene-graft-ethylenetetrafluoroethylene resin, a polystyrene-graft-polyvinylidene fluoride resin, and a polystyrene-graft-tetrafluoroethylene resin.

There is no particular limitation on the method of mixing an aromatic hydrocarbon-based polymer electrolyte with a phosphorus-containing polymer compound, and various methods can be used. For example, they may be mixed by doping or blending through dissolution. When both an aromatic hydrocarbon-based polymer electrolyte and a phosphorus-containing polymer compound can be hot-melted, they may be mixed by blending through hot melting.

A structure in which a phosphorus-containing polymer compound is uniformly dispersed in the entire solid polymer electrolyte may be formed by uniformly mixing the aromatic hydrocarbon-based polymer electrolyte with the phosphorus-containing polymer compound. Alternatively, a main portion of a solid polymer electrolyte is composed only of the aromatic hydrocarbon-based polymer electrolyte, and only a portion that is required to have oxidation resistance may be composed of a mixture of the aromatic hydrocarbon-based polymer electrolyte and the phosphorus-containing polymer compound.

For example, in the environment wherein radicals are generated at random in a membrane, like the case where a solid polymer electrolyte membrane is heated in a state of being immersed in a peroxide solution, a structure in which the phosphorus-containing polymer compound is uniformly dispersed in a solid polymer electrolyte membrane, which is obtained by uniformly mixing an aromatic hydrocarbon-based polymer electrolyte with a phosphorus-containing polymer compound, is effective.

In the environment wherein a peroxide is formed in a catalyst layer on a surface of a membrane and the thus formed peroxide becomes a peroxide radical while diffusing to cause a degradation reaction, like an electrolyte membrane for water electrolysis or a fuel cell, it is not necessary that the phosphorus-containing polymer compound is uniformly dispersed in the membrane. In this case, only a surface portion of the membrane, at which an oxidation degradation reaction occurs most vigorously, may be composed of a mixture of the aromatic hydrocarbon-based polymer electrolyte and the phosphorus-containing polymer compound by doping the aromatic hydrocarbon-based polymer electrolyte with the phosphorus-containing polymer compound.

Alternatively, it is considered to be effective to use a method in which a membrane-shaped molded article composed of a mixture of an aromatic hydrocarbon-based polymer electrolyte and a phosphorus-containing polymer compound is inserted between an electrolyte composed only of an aromatic hydrocarbon-based polymer electrolyte and an electrode, for the purpose of maintaining performance of an electrolyte membrane.

The kind and amount of an electrolyte group to be introduced in the aromatic hydrocarbon-based polymer electrolyte, or the mixing ratio of the phosphorus-containing polymer compound to the aromatic hydrocarbon-based polymer electrolyte may be adjusted according to characteristics required to the solid polymer electrolyte, such as conductivity and oxidation resistance.

That is, as the amount of the phosphorus-containing polymer compound to be introduced increases, oxidation resistance is improved. However, since the functional group containing phosphorus is a weakly acidic group, conductivity of the entire material decreases with the increase of the introduction amount. Therefore, when used in applications that attach weight to only oxidation resistance and do not require high conductivity, the mixing ratio of the phosphorus-containing polymer compound to the aromatic hydrocarbon-based polymer electrolyte may be increased.

When high conductivity characteristics are required, in addition to high oxidation resistance, like a fuel cell and water electrolysis, the phosphorus-containing polymer compound may be mixed with an aromatic hydrocarbon-based polymer electrolyte having a strong acid group such as a sulfonic acid group introduced therein at a predetermined ratio. When high resistance to chlorine and an aqueous sodium hydroxide solution with high temperature and high concentration is required, and also back diffusion of ions must be prevented, like brine electrolysis, the phosphorus-containing polymer compound may be mixed with the aromatic hydrocarbon-based polymer electrolyte having a sulfonic acid group and a carboxylic acid group introduced therein at a predetermined ratio.

When the amount of the polymer compound containing phosphorus to be introduced is less than 0.05 parts by mass of the polymer electrolyte composition, a sufficient oxidation resistance improving effect is not exerted. Therefore, it is necessary that the amount of the polymer compound containing phosphorus to be introduced is adjusted to 0.05 parts by mass or more based on the whole electrolyte groups. Particularly, in case of the solid polymer electrolyte used under severe conditions such as a fuel cell, water electrolysis and brine electrolysis, the amount of the functional group containing phosphorus is suitably 0.3 parts by mass or more. When the amount of the phosphorus-containing polymer compound to be introduced is more than 10 parts by mass based on the polymer electrolyte composition, physical properties such as proton conductivity of the electrolyte polymer may deteriorate. Therefore, it is necessary that the amount of the phosphorus-containing polymer compound to be introduced is adjusted to 10 parts by mass or less based on the whole electrolyte.

A feature of the present invention is that the polymer electrolyte membrane composition contains 10 to 5,000 ppm of a metallic element. A preferable metallic element is desirably a metallic element that interacts with a P-OH structure, or a P-OH structure and an S-OH structure, thereby making the phosphorus-containing polymer compound insoluble or hardly soluble in water, and examples thereof include alkali earth metals, transition metals, and rare earth elements. In particular, Mg, Ca, Co, Ni, Zn, Sr, Zr, Ba and Ce are preferable.

The composite polymer electrolyte membrane composition in the present invention may contain any one of the above-mentioned metallic elements, or may contain two or more kinds of metallic elements.

When the amount of the metallic element is not more than 10 ppm based on the electrolyte composition, the elution suppressing effect of the phosphorus-containing polymer compound is not insufficient. The amount of more than 5,000 ppm is not preferable since characteristics of the fuel cell membrane as the electrolyte deteriorate, for example, proton conductivity decreases. The content is preferably 50 ppm or more and less than 3,000 ppm, and more preferably 100 ppm or more and less than 1,000 ppm.

As mentioned previously, effects of adding the metallic element include suppression of elution of the phosphorus-containing polymer compound into water. When the above-mentioned amount of the metallic element is contained, the amount of the phosphorus-containing polymer compound to be eluted into water is 10% by mass or less even in case of immersing the compound in water at 80°C for 48 hours.

There is no particular limitation on the method of mixing the metallic element, and various methods can be used. For example, there is exemplified a method in which a solid polymer electrolyte membrane or a precursor thereof, a catalyst layer or a diffusion layer, or a solid polymer electrolyte membrane with a catalyst layer formed on a surface thereof or a precursor thereof, a diffusion layer or a base material such as polyethylene terephthalate are brought into contact with either of a first solution containing a water-soluble salt containing a metallic element or an organic metal complex, or a second solution containing a phosphorus-containing polymer compound, and then brought into contact with the other one. Alternatively, there is exemplified a method in which an electrolyte membrane of a mixture of an aromatic hydrocarbon-based solid polymer electrolyte and a phosphorus-containing polymer compound, or a precursor thereof, a catalyst layer or a diffusion layer, or an electrolyte membrane of a mixture of phosphorus-containing polymer compounds with a catalyst layer formed on a surface thereof, or a precursor thereof, a diffusion layer or a base material such as polyethylene terephthalate are brought into contact with a solution containing a water-soluble salt containing a metallic element or an organic metal complex. The method may be a method in which a phosphorus-containing polymer compound or a solution thereof is mixed with a water-soluble salt containing a metallic element, an organic metal complex or a solution thereof to form a composite of a phosphorus-containing polymer and a metal, and then the composite is mixed with an aromatic hydrocarbon-based polymer electrolyte.

In a state where a sulfonic acid group of a polymer electrolyte membrane forms a salt with a cation species, a phosphorus-containing polymer compound or a metallic element may be doped or mixed. Alternatively, in a state of being converted into a free sulfonic acid group by being subjected to an acid treatment, a phosphorus-containing polymer compound or a metallic element may be doped or mixed.

The salt containing a metallic element may be soluble in water, and there is no particular limitation on the kind of the salt. Specifically, acetates, oxalates, nitrates, lead sulfate and chlorides of metallic elements such as rare earth elements are exemplified as preferable examples of the water-soluble salt.

The organic metal complex may be a liquid at normal temperature, or may be soluble in an appropriate solvent. Specific examples of suitable organic metal complexes include tert-butoxide ($(CH_3)_3CO$-), ethyl hexanoate, octanedionate, and isopropoxide ($(CH_3)_2CHO$-) of metallic elements such as rare earth elements.

After doping or mixing the phosphorus-containing polymer compound or metallic element, washing with ion-exchange water may be carried out at any stage so as to remove excess phosphorus-containing polymer compound or metallic element. At this time, heat may be optionally applied.

In either method, when remaining and elution of excess phosphorus-containing polymer compound or metallic element are not problematic, washing with ion-exchange water may be omitted. The solution of a water-soluble salt containing a metallic element or an organic metal complex may be used as it is. In order to stabilize the water-soluble salt or organic metal complex, a complexing agent such as citric acid ($C_6H_8O_7$) may be optionally added.

Examples of the solvent that can be used in a solution composition for the production of the polymer electrolyte membrane of the present invention include, but are not limited to, aprotic organic polar solvents such as N,N-dimethylformamide, N,N-dimethylacetamide, N,N-diethylacetamide, N-methyl-2-pyrrolidone, dimethyl sulfoxide, hexamethylphosphoneamide and N-morpholine oxide; polar solvents, for example, alcohol-based solvents such as methanol and ethanol, ketone-based solvents such as acetone, and ether-based solvents such as diethylether; and mixtures of these organic solvents and mixtures of these organic solvents with water.

The concentration of the polymer electrolyte in the solution composition is preferably within a range of 0.1 to 50% by weight, more preferably 5 to 50% by weight, and still more preferably 10 to 40% by weight.

The technique of forming the polymer electrolyte membrane of the present invention is most preferably casting from a solution composition, and a polymer electrolyte membrane can be obtained by removing the solvent from the

cast solution composition as described above. The solvent is preferably removed by drying from the viewpoint of uniformity of the polymer electrolyte membrane. In order to avoid decomposition and change in quality of a compound and a solvent, drying can be carried out at a temperature as low as possible under reduced pressure. In case the solution composition has high viscosity, when a substrate and a solution are heated and casting is carried out at high temperature, viscosity of the solution composition decreases and thus casting can be easily carried out. There is no particular limitation on the thickness of the solution composition in case of casting, and the thickness is preferably 10 to 2,000 μm, and more preferably 50 to 1,500 μm. When the thickness of the solution composition is less than 10 μm, it may become impossible to retain the form of the polymer electrolyte membrane. In contrast, when the thickness is more than 2,000 μm, a non-uniform membrane tends to be formed. A known method can be used as the method of controlling the cast thickness of the solution composition. For example, the thickness can be controlled through the amount and concentration of the solution by adjusting the thickness to a given thickness using an applicator, a doctor blade or the like, or adjusting the cast area to a given area using a glass petri dish or the like. It is possible to obtain a more uniform membrane by adjusting the rate of removing the solvent from the cast solution composition. For example, in case of heating, an evaporation rate can be decreased by adjusting the temperature to a low temperature at the initial stage. In case of immersion in a non-solvent such as water, the solidification rate of the compound can be adjusted by leaving the solution composition to stand in air or inert gas for an appropriate time. When processing is carried out under heating, it is preferred that a sulfonic acid group in a proton conductive polymer forms a salt with a cation since stability is improved. In order to use the composition as the polymer electrolyte membrane, it is also possible to convert the composition into free sulfonic acid by an appropriate acid treatment. In this case, it is effective to immerse the membrane in an aqueous solution of sulfuric acid, hydrochloric acid or the like with or without heating.

The membrane electrode assembly of the present invention can be obtained by bonding a composite polymer electrolyte membrane of the present invention with an electrode catalyst layer.

The electrode is composed of an electrode material and a layer containing a catalyst formed on a surface thereof (electrode catalyst layer), and a known material can be used as the electrode material. For example, conductive porous materials such as a carbon paper and a carbon cloth can be used, but the material is not limited thereto. It is also possible to use, as the conductive porous material, those subjected to a surface treatment such as a water repellent treatment or a hydrophilic treatment, for example, a carbon paper, a carbon cloth and the like. A known material can be used as the catalyst. Examples thereof include, but are not limited to, platinum and an alloy of platinum and ruthenium.

The catalyst can be used in any known form. For example, carbon particles with fine catalyst particles supported thereon can be used, but the form is not limited thereto.

It is possible to use an adhesive in an electrode catalyst layer containing the catalyst or particles with the catalyst supported thereon. A resin having proton conductivity can be used as the adhesive.

The assembly can be produced using a conventionally known method, and examples thereof include, but are not limited to, a method in which a composite polymer electrolyte membrane is bonded with an electrode by applying an adhesive on a surface of the electrode; a method in which a composite polymer electrolyte membrane and an electrode catalyst layer formed in advance by applying a paste containing a catalyst on an electrode are heated and pressurized; a method in which a catalyst layer formed on a separate sheet is transferred to a composite polymer electrolyte membrane and then an electrode is attached; and a method in which a surface of a composite polymer electrolyte membrane is coated with a dispersion containing a catalyst, conductive particles and the like by spraying, printing or the like and then an electrode is bonded. A known adhesive such as a NAFION (trade name) solution may be used as an adhesive, or an adhesive containing a polymer composition of the same kind of a polymer constituting a polymer electrolyte in the present invention as a main component, or an adhesive containing another hydrocarbon-based proton conductive polymer as a main component may be used. It is possible to obtain an electrode catalyst layer by dispersing, in the above-mentioned adhesive, a catalyst such as platinum or a platinum-ruthenium alloy required for an electrode reaction supported on conductive particles such as carbon.

The fuel cell of the present invention can be produced using the composite polymer electrolyte membrane or membrane electrode assembly of the present invention. The fuel cell of the present invention includes, for example, an oxygen electrode, a fuel electrode, a polymer electrolyte membrane disposed in a state of being interposed between the respective electrodes, a passage of an oxidizing agent provided on the oxygen electrode side, and a passage of a fuel provided on the fuel electrode side. A fuel cell stack can be obtained by connecting such unit cells using a conductive separator.

The composite polymer electrolyte membrane of the present invention is suited for a solid polymer type fuel cell. The solid polymer electrolyte composition of the present invention is excellent in oxidation resistance by a phosphorus-containing polymer compound, and is also excellent in long-term durability by suppressing elution of the phosphorus-containing polymer compound. The composite polymer electrolyte membrane of the present invention can be used in a fuel cell using, as a fuel, a liquid such as methanol, dimethyl ether or formic acid, and can be particularly suitably used in a fuel cell using a gas such as hydrogen. It is also possible to use the composite polymer electrolyte membrane of the present invention in any known applications, for example, polymer electrolyte membranes such as an

electrolyte membrane and a separation membrane.

EXAMPLES

The present invention will be specifically described below by way of examples, but the present invention is not limited to these examples. Various measurements were carried out as follows.

<Solution Viscosity>

A polymer powder was dissolved in N-methyl-2-pyrrolidone (abbreviation: NMP) in the concentration of 0.5 g/dL. Using an Ubbelohde type viscometer, the viscosity was measured in a constant temperature bath of 30°C and was evaluated by logarithmic viscosity (ln[ta/tb])/c ("ta" denotes the time in seconds required for the falling of a sample solution, "tb" denotes the time in seconds required for the falling of a solvent alone, and "c" denotes the concentration of a polymer).

<Proton Conductivity>

On a self-made measuring probe (made of TEFLON@), a platinum wire (diameter of 0.2 mm) was pressed against a surface of a strip-shaped membrane sample and the sample was held in an oven maintained at constant temperature and humidity of 80°C and 95% RH (LH-20-01, manufactured by Nagano Science Co., Ltd.), and then impedance between the platinum wires was measured by 1250 FREQUENCY RESPONSE ANALYSER manufactured by SOLARTRON. The measurement was carried out by varying the distance between electrodes. The conductivity, in which contact resistance between the membrane and the platinum wire was cancelled, was calculated from a gradient, obtained by plotting a measured value of resistance estimated from a distance between electrodes and a C-C plot, by the following equation.

Conductivity [S/cm] = 1/membrane width [cm] × membrane thickness [cm] × gradient between electrodes [Ω/cm]

<Evaluation of Power Generation>

A commercially available 40% Pt catalyst-supporting carbon (catalyst for fuel cell TEC10V40E, manufactured by Tanaka Kikinzoku Kogyo Co., Ltd.) and a small amount of ultrapure water and isopropanol were added to a 20% NAFION (trade name) solution manufactured by DuPont, and then the mixture was stirred until it became uniform to prepare a catalyst paste. The obtained catalyst paste was uniformly applied on a carbon paper TGPH-060 manufactured by Toray Industries, Inc. and dried so that the coating amount of platinum became 0.5 mg/cm$^2$ to produce a gas diffusion layer with an electrode catalyst layer. A polymer electrolyte membrane was interposed between the gas diffusion layers with an electrode catalyst layer so that the electrode catalyst layer was in contact with the membrane, followed by pressurization and heating at 160°C under 10 MPa for 3 minutes using a hot press method to obtain a membrane electrode assembly. The obtained assembly was assembled into a fuel cell for evaluation FC25-02SP manufactured by Electrochem, Inc., and then hydrogen and air humidified at 75°C were respectively supplied to an anode and a cathode at a cell temperature of 80°C and power generation characteristics were evaluated. An output voltage at a current density of 0.5 A/cm$^2$ was regarded as an electric power (V).

<NMR Measurement>

A polymer (sulfonic acid group is a Na or K salt) was dissolved in a solvent, and then $^1$H-NMR and $^{13}$C-NMR were measured respectively at room temperature and 70°C using UNITY-500 manufactured by VARIAN, Inc. A mixed solvent (85/15 vol./vol.) of NMP and deuterated dimethyl sulfoxide was used as a solvent. With respect to a hydrophilic oligomer and a hydrophobic oligomer, that respectively constitute a hydrophilic segment and a hydrophobic segment of a block polymer, $^1$H-NMR spectrum was measured and then the number average molecular weight was determined from each integration ratio of a peak attributed to the end group and a peak of a skeleton moiety. With respect to a block polymer, a composition ratio of a hydrophilic segment to a hydrophobic segment was analyzed by $^1$H-NMR.

<Evaluation of Swellability>

A proton-exchange membrane left to stand in a room at 23°C and 50% RH for 1 day was cut into pieces each measuring 50 mm × 50 mm and then immersed in hot water of 80°C for 24 hours. After immersion, the dimension and weight of the membrane were quickly measured. The membrane was dried at 120°C for 3 hours and the dry weight was

measured. In accordance with the equation shown below, the water absorption ratio and area swelling ratio were calculated. With respect to the dimension of the membrane, the length of two orthogonal sides linked to a specific vertex was measured.

$$\text{Water absorption ratio (\%)} = \{\text{weight (g) after immersion - dry weight (g)}\}/\text{dry weight (g)} \times 100$$

$$\text{Area swelling ratio (\%)} = \{\text{side length A (mm) after immersion} \times \text{side length B (mm) after immersion}\}/\{50 \times 50\} \times 100 - 100$$

<Quantitative Analysis of Phosphorus>

A proton-exchange membrane was dried by a vacuum dryer (at 110°C) for 8 hours and then left standing to cool to room temperature in a desiccator. After weighing a part of a sample in a 50 ml Erlenmeyer flask, 97% sulfuric acid for precision analysis (3 ml), 60% nitric acid for precision analysis (3.5 ml) and 60% perchloric acid for precision analysis (0.5 ml) were added and the temperature was gradually raised on a hot plate, thereby carrying out acid decomposition. Finally, heating was continued until white smoke of sulfuric acid was recognized to remove nitric acid and perchloric acid. Using ammonia water, a neutralization treatment was carried out and molybdic acid was reacted with phosphoric acid in the decomposed solution to form phosphomolybdic acid, which was reduced with sulfuric acid hydrazine to obtain heteropolyblue. Then, quantitative determination was carried out by measuring the absorbance of heteropolyblue at 830 nm. The quantitative determination was carried out by a calibration curve obtained separately using a phosphorus standard solution.

<Quantitative Analysis of Zirconium and Calcium>

A proton-exchange membrane was dried by a vacuum dryer (at 110°C) for 8 hours and then left standing to cool to room temperature in a desiccator. After weighing a part of a sample in a platinum crucible, the sample was carbonized by heating on a hot plate. After carbonization, the carbonized sample was ashed by heating overnight in an electric furnace (550°C). 6 M hydrochloric acid (5 ml) and 50% hydrofluoric acid (several droplets) were added to the ashed residue and a heat treatment (100°C) was carried out on the hot plate. After vaporization of the acid, 1.2 M hydrochloric acid (20 ml) was added and then an inorganic substance was completely dissolved by leaving the mixture to stand overnight. The amounts of zirconium and calcium in the solution were determined by a calibration curve method using an ICP emission spectrometer.

<Quantitative Analysis of Cerium>

The sample was dried by a vacuum dryer (at 110°C) for 8 hours and then left standing to cool to room temperature in a desiccator. After weighing a part of a sample in a container for acid decomposition (in a closed system) made of TEFLON®, 60% nitric acid for precision analysis (4 ml) was added and then heating acid decomposition was carried out in a microwave decomposition apparatus. After confirming complete decomposition, a solution obtained by diluting the resultant with purified water to make a constant volume of 30 ml was regarded as the solution to be measured. The amount of cerium in the solution to be measured was determined by a calibration curve method using an ICP emission spectrometer.

<Elution Test of Phosphorus-Containing Compound>

A proton-exchange membrane was immersed in water in an amount of 500-fold excess or more and then heated in an oven of 80°C for 48 hours. The sample was taken out and then air-dried, and then quantitative analysis of phosphorus was carried out. The elution amount of a phosphorus-containing compound was determined by the following equation.

$$\text{Elution amount (\%)} = (\text{amount of phosphorus before elution test} - \text{amount of phosphorus after elution test})/(\text{amount of phosphorus before elution test}) \times 100$$

<Fenton's Test>

Ferrous sulfate heptahydrate (0.149 g) was dissolved in 1 L of water to prepare an aqueous 30 ppm Fe solution. 30% hydrogen peroxide water (50 g) was added to the aqueous 30 ppm Fe solution (50 ml) and further water was added, followed by well stirring to make 500 ml in total amount, and thus a Fenton's reagent was prepared. A proton-exchange membrane (52 mg) dried in advance at 100°C for 1 hour and then subjected to weight measurement was immersed in the Fenton's reagent (29 ml) charged in a reagent bottle and then treated at 60°C for 3 hours or 4 hours. The membrane was taken out, washed with water and dried at 100°C for 1 hour, and then the weight was measured. When the membrane did not retain its shape, the residue was filtered through a glass filter and dried at 100°C for 1 hour, and then the weight was measured. The remaining ratio (%) of weight after the treatment based on the weight before the treatment was determined.

<Hydrogen Peroxide Decomposition Test>

A proton-exchange membrane (52 mg) dried in advance at 100°C for 1 hour and then subjected to weight measurement was immersed in 10% hydrogen peroxide water (29 ml) charged in a reagent bottle and then treated at 80°C for 3 hours or 4 hours. The membrane was taken out, washed with water and dried at 100°C for 1 hour, and then the weight was measured.

Synthesis of a polymer electrolyte will be described below.

<Production Example 1: Synthesis of Polymer Electrolyte (P1)>

4,4'-dichlorobenzophenone-3,3-sodium disulfonate (86.90 g, 190.9 mmol), 2,6-dichlorobenzonitrile (abbreviation: DCBN) (41.91 g, 242.9 mmol), 4,4'-biphenol (abbreviation: BP) (65.14 g, 353.6 mmol), 2,2-bis(4-hydroxyphenyl) hexafluoropropane (abbreviation: 6F-BisA) (26.81 g, 80.2 mmol), potassium carbonate (65.95 g, 477.2 mmol), NMP (500 ml) and toluene (100 ml) were charged in a 1,000 ml side-arm flask equipped with a nitrogen introducing tube, a stirring blade, a Dean-Stark trap and a thermometer, and then heated under a nitrogen gas flow while stirring in an oil bath. After dehydration was carried out at 140°C by azeotropy with toluene, toluene was completely distilled off. Thereafter, the temperature was raised to 200°C, followed by heating for 5 hours. The reaction solution was cooled to room temperature and then an oligomer was solidified by pouring the solution into 3,000 ml of pure water. Furthermore, NMP and an inorganic salt were removed by washing five times with pure water. After separation through filtration and further drying under reduced pressure at 120°C for 16 hours, a polymer electrolyte (P1) of a random copolymer was obtained. The obtained polymer electrolyte is abbreviated to (P1). The chemical structure of P1 is shown below. P1 had a logarithmic viscosity of 1.2 dL/g.

[Chemical Formula 9]

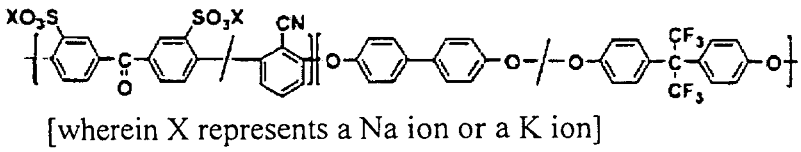

[wherein X represents a Na ion or a K ion]

<Production Example 2: Synthesis of Hydrophobic Oligomer>

2,6-dichlorobenzonitrile (abbreviation: DCBN) (30.00 g, 173.9 mmol), 4,4'-biphenol (abbreviation: BP) (32.87 g, 176.4 mmol), potassium carbonate (29.25 g, 211.7 mmol) and NMP (440 ml) were charged in a 1,000 ml side-arm flask equipped with a nitrogen introducing tube, a stirring blade, a Dean-Stark trap and a thermometer, and then heated under a nitrogen gas flow while stirring in an oil bath. The temperature was raised to 200°C, followed by stirring for 4 hours. The reaction solution was cooled to room temperature and then an oligomer was solidified by pouring the solution into 3,000 ml of pure water. Furthermore, NMP and an inorganic salt were removed by washing three times with pure

water. After separating the oligomer washed with water through filtration and further drying under reduced pressure at 120°C for 16 hours, a hydrophobic oligomer was obtained. The number average molecular weight by the $^1$H-NMR measurement was 12,169. The chemical structure is shown below.

[Chemical Formula 10]

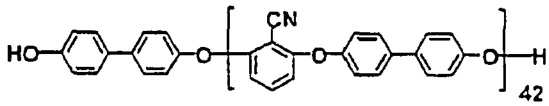

<Production Example 3: Synthesis of Hydrophilic Oligomer>

Sodium 4,4'-dichlorodiphenyl sulfone-3,3'-disulfonate (abbreviation: S-DCDPS) (250.0 g, 508.9 mmol), BP (98.63 g, 529.7 mmol), sodium carbonate (66.23 g, 624.9 mmol), NMP (650 ml) and toluene (150 ml) were charged in a 2,000 ml side-arm flask equipped with a nitrogen introducing tube, a stirring blade, a Dean-Stark trap and a thermometer, and then heated under a nitrogen gas flow while stirring in an oil bath. After dehydration was carried out at 140°C by azeotropy with toluene, toluene was completely distilled off. Thereafter, the temperature was raised to 200°C, followed by heating for 16 hours. Subsequently, NMP (500 ml) was charged, followed by cooling to room temperature while stirring. The obtained solution was suction-filtered through a 25G2 glass filter to obtain a yellow transparent solution. The oligomer was solidified by adding dropwise the obtained solution in 3 L of acetone. The oligomer was further washed three times with acetone, separated through filtration and then dried under reduced pressure to obtain a hydrophilic oligomer. The number average molecular weight by the $^1$H-NMR measurement was 12,460. The chemical structure of the hydrophilic oligomer is shown below.

[Chemical Formula 11]

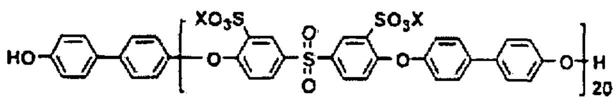

[wherein X represents a Na ion or a K ion]

<Production Example 4: Synthesis of Polymer Electrolyte (P2)>

A hydrophilic oligomer (6.95 g), a hydrophobic oligomer (5.00 g) and NMP (110 ml) were charged in a 200 ml side-arm flask equipped with a nitrogen introducing tube, a stirring blade, a Dean-Stark trap and a thermometer, and then dissolved by stirring in an oil bath of 70°C under a nitrogen gas flow. Thereafter, decafluorobiphenyl (DFB) (0.27 g) and potassium carbonate (0.12 g) were added, followed by heating to 110°C and further reaction for 10 hours. The solid content concentration of the reaction solution was adjusted to 10% by weight. After cooling to room temperature, the polymer was solidified by adding dropwise in 1 L of pure water. The polymer was washed three times with pure water and then treated at 80°C for 5 hours while being immersed in pure water. Furthermore, the dehydrated polymer was immersed in a mixed solvent of isopropanol (1,000 ml) and water (500 ml) at room temperature for 16 hours, and then the polymer was taken out and washed. The same operation was carried out once again. Thereafter, the polymer was separated through filtration and dried under reduced pressure at 120°C for 12 hours to obtain a polymer electrolyte (P2). P2 had a logarithmic viscosity of 2.1 dL/g. A composition ratio of a hydrophilic segment to a hydrophobic segment determined from NMR was 32/68. The chemical structure is shown below.

[Chemical Formula 12]

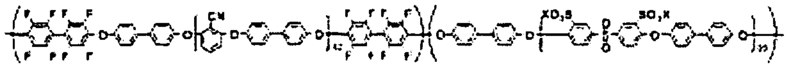

[wherein X represents a Na ion or a K ion]

Synthesis of a copolymer of vinylphosphonic acid (VP) and N-isopropylacrylamide (NIPAAm) will be described below.

In accordance with the description of J. Appl. Poly. sci., 70 1947 (1998), a random polymer (VP-N) including a unit structure represented by the formula shown below was obtained. As a result of analysis of the amount of phosphorus, the amount of phosphorus of the polymer was 0.11 g per 1 g of the polymer.

[Chemical Formula 13]

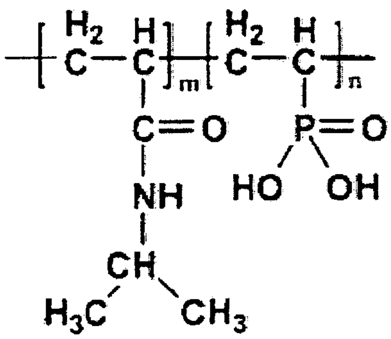

Example 1

A 10% NMP solution (20 g) of P1 was mixed with a 5% NMP/water (= 15/85 (wt/wt)) solution (500 mg) of polyvinyl phosphonic acid (abbreviation: PVPA, manufactured by Aldrich). Thereafter, the mixture was cast on a glass plate in the thickness of 400 μm using an applicator and then dried by heating at 100°C for 2 hours. Then, the glass plate was left standing to cool to about room temperature and the membrane was peeled off by immersing the glass plate with the membrane in water. The peeled membrane was immersed in pure water and then immersed overnight in an aqueous 0.015 wt% solution of $ZrOCl_2 \cdot 8H_2O$. Then, the membrane was washed by immersion in pure water, immersed in 1 N sulfuric acid for 1 hour to convert a sulfonic acid group into an acid type group, washed with pure water to remove free sulfuric acid, and then air-dried to obtain a proton-exchange membrane.

Example 2

In the same manner as in Example 1, except that P2 was used in place of P1, a proton-exchange membrane was obtained.

Example 3

In the same manner as in Example 2, except that the amount of the 5% NMP/water (= 15/85 (wt/wt)) solution of PVPA was changed to 80 mg and the concentration of the aqueous $ZrOCl_2 \cdot 8H_2O$ solution was changed to 0.005 wt%, a proton-exchange membrane was produced.

Example 4

In the same manner as in Example 2, except that a 10% NMP/water (= 15/85 (wt/wt)) solution (1,800 mg) of PVPA was used in place of the 5% NMP/water (= 15/85 (wt/wt)) solution of PVPA and the concentration of the aqueous $ZrOCl_2 \cdot 8H_2O$ solution was changed to 0.1 wt%, a proton-exchange membrane was produced.

Example 5

In the same manner as in Example 2, except that a 10% methanol solution (500 mg) of VP-N was used in place of PVPA, a proton-exchange membrane was produced.

Example 6

In the same manner as in Example 2, except that an aqueous 0.02 wt% solution of $Ce(NO_3)_3 \cdot 6H_2O$ was used in place of the aqueous 0.015 wt% solution of $ZrOCl_2 \cdot 8H_2O$, a proton-exchange membrane was produced.

Example 7

In the same manner as in Example 2, except that an aqueous 0.01 wt% solution of $Ca(NO_3)_2$-$4H_2O$ was used in place of the aqueous 0.015 wt% solution of $ZrOCl_2 \cdot 8H_2O$, a proton-exchange membrane was produced.

Example 8

P1 was immersed overnight in 1 N sulfuric acid overnight to convert a sulfonic acid group into an acid type group, washed with pure water to remove free sulfuric acid, and then dried under reduced pressure at 110°C for 8 hours. A 10% NMP solution (20 g) of the obtained acid type P1, a 10% NMP/water (= 15/85 (wt/wt) solution (250 mg) of PVPA and an aqueous 0.015 wt% solution (350 mg) of $ZrOCl_2 \cdot 8H_2O$ were mixed. Thereafter, the obtained mixed solution was cast on a glass plate in the thickness of 400 μm using an applicator, and then dried by heating at 100°C for 2 hours. Then, the glass plate was left standing to cool to about room temperature and the membrane was peeled off by immersing the glass plate with the membrane in water. The peeled membrane was washed with pure water to remove residual NMP, and then air-dried to obtain a proton-exchange membrane.

Comparative Example 1

A 10% NMP solution (20 g) of P1 was cast on a glass plate in the thickness of 400 μm using an applicator, and then dried by heating at 100°C for 2 hours. Then, the glass plate was left standing to cool to about room temperature and the membrane was peeled off by immersing the glass plate with the membrane in water. Then, the peeled membrane was immersed in pure water, immersed in 1 N sulfuric acid for 1 hour to convert a sulfonic acid group into an acid type group, washed with pure water to remove free sulfuric acid, and then air-dried to obtain a proton-exchange membrane.

Comparative Example 2

In the same manner as in Comparative Example 1, except that P2 was used in place of P1, a proton-exchange membrane was produced.

Comparative Example 3

A 10% NMP solution (20 g) of P2 was mixed with a 5% NMP/water (= 15/85 (wt/wt)) solution (500 mg) of polyvinyl phosphonic acid (abbreviation: PVPA, manufactured by Aldrich). Thereafter, the mixed solution was cast on a glass plate in the thickness of 400 μm using an applicator, and then dried by heating at 100°C for 2 hours. Then, the glass plate was left standing to cool to about room temperature and the membrane was peeled off by immersing the glass plate with the membrane in water. Then, the peeled membrane was immersed in pure water, immersed in 1 N sulfuric acid for 1 hour to convert a sulfonic acid group into an acid type group, washed with pure water to remove free sulfuric acid, and then air-dried to obtain a proton-exchange membrane.

Comparative Example 4

The proton-exchange membrane (0.4 g) obtained in Comparative Example 2 was immersed in an aqueous 4 wt% solution (100 ml) of $ZrOCl_2 \cdot 8H_2O$ and then heated at reflux for 2 hours. Then, the membrane was taken out and immersed overnight in an aqueous 50% solution of nitrilotris(methylenephosphonic acid) (manufactured by CHELEST CORPORATION). The membrane was washed with pure water to remove free acid, and then air-dried to obtain a proton-exchange membrane.
Proton conductivity of the proton-exchange membranes obtained in examples and comparative examples is shown in Table 1.

Table 1

| | Polymer electrolyte | | Phosphorus-containing compound | | Metallic element | | Water absorption ratio (%) | Area swelling ratio (%) | Proton conductivity (S/cm) |
|---|---|---|---|---|---|---|---|---|---|
| | | Parts by mass | | Parts by mass | | ppm | | | |
| Example 1 | P1 | 98.8 | PVPA | 1.2 | Zr | 220 | 73 | 30 | 0.20 |
| Example 2 | P2 | 98.8 | PVPA | 1.2 | Zr | 180 | 50 | 6 | 0.21 |
| Example 3 | P2 | 99.8 | PVPA | 0.2 | Zr | 50 | 55 | 5 | 0.23 |
| Example 4 | P2 | 91.7 | PVPA | 8.3 | Zr | 2200 | 46 | 4 | 0.16 |
| Example 5 | P2 | 97.6 | VP-N | 2.4 | Zr | 210 | 49 | 5 | 0.20 |
| Example 6 | P2 | 98.8 | PVPA | 1.2 | Ce | 99 | 52 | 7 | 0.19 |
| Example 7 | P2 | 98.8 | PVPA | 1.2 | Ca | 250 | 54 | 5 | 0.19 |
| Example 8 | P1 | 98.8 | PVPA | 1.2 | Zr | 620 | 53 | 6 | 0.17 |
| Comparative Example 1 | P1 | 100 | - | - | - | - | 75 | 32 | 0.22 |
| Comparative Example 2 | P2 | 100 | - | - | - | - | 57 | 6 | 0.23 |
| Comparative Example 3 | P2 | 98.8 | PVPA | 1.2 | - | - | 55 | 6 | 0.24 |
| Comparative Example 4 | P2 | 99.8 | Nitrilotris (methylenephosphonic acid) | 0.2 | Zr | 1100 | 52 | 5 | 0.23 |

Decrease in proton conductivity by the addition of the phosphorus-containing compound was scarcely recognized. Decrease in proton conductivity was recognized by the addition of the metallic element, but it was within a practically permissible range.

With respect to the proton-exchange membranes obtained in examples and comparative examples, a Fenton's Test was carried out. The results are shown in Table 2.

Table 2

| | Fenton's test time | |
|---|---|---|
| | 3 hours | 4 hours |
| | Remaining weight (%) | |
| Example 1 | 100 | 98 |
| Example 2 | 100 | 100 |
| Example 3 | 100 | 70 |
| Example 4 | 100 | 100 |
| Example 5 | 100 | 95 |
| Example 6 | 100 | 99 |
| Example 7 | 100 | 100 |
| Example 8 | 100 | 97 |
| Comparative Example 1 | 95 | 3 |
| Comparative Example 2 | 76 | 56 |
| Comparative Example 3 | 100 | 99 |
| Comparative Example 4 | 100 | 82 |

The proton-exchange membrane of the random polymer of Comparative Example 1 became considerably brittle after 3 hours, and the membrane scarcely retained its shape after 4 hours. The proton-exchange membrane of the block copolymer of Comparative Example 2 showed a state where the hydrophilic segment completely fell off, and only the hydrophobic moiety remained after 4 hours. The proton-exchange membranes containing the phosphorus-containing compound added therein of Examples 1 to 8 and Comparative Examples 3 and 4 showed a small change in weight, and it was confirmed that the Fenton resistance is improved by the addition of the phosphorus-containing compound.

With respect to the proton-exchange membranes obtained in examples and comparative examples, a hydrogen peroxide decomposition test was carried out. The results are shown in Table 3.

Table 3

| | Hydrogen peroxide decomposition test time | |
|---|---|---|
| | 3 hours | 4 hours |
| | Remaining weight (%) | |
| Example 2 | 100 | 100 |
| Example 3 | 100 | 100 |
| Comparative Example 2 | 65 | 56 |
| Comparative Example 4 | 70 | 67 |

The proton-exchange membrane of the block copolymer containing no phosphorus-containing compound added therein of Comparative Example 2 showed a state where the hydrophilic segment completely fell off, and only the hydrophobic moiety remained after 4 hours. In the proton-exchange membrane containing a low molecular weight phosphorus-containing compound added therein of Comparative Example 4, hydrogen peroxide resistance was improved as compared with Comparative Example 2, but the effect was insufficient. The proton-exchange membranes containing

PVPA added therein of Examples 2 and 3 showed high hydrogen peroxide resistance.

With respect to the proton-exchange membranes obtained in examples and comparative examples, an elution test of phosphorus-containing compounds and a Fenton's Test of membranes after the elution test were carried out. The results are shown in Table 4.

Table 4

| | Before test | | After test | After test | Remaining weight in case of Fenton's test time of 3 hours (%) |
|---|---|---|---|---|---|
| | Amount of metal (mg/kg) | Amount of P (mg/kg) | Amount of P (mg/kg) | Elution amount of PVPA (%) | |
| Example 1 | 220 | 2000 | 1960 | 2 | 96 |
| Example 2 | 180 | 1900 | 1840 | 3 | 95 |
| Example 3 | 50 | 350 | 345 | 1 | 88 |
| Example 4 | 2200 | 14600 | 14100 | 3 | 99 |
| Example 5 | 210 | 2400 | 2300 | 4 | 93 |
| Example 6 | 99 | 1880 | 1830 | 3 | 96 |
| Example 7 | 250 | 2100 | 2000 | 5 | 97 |
| Example 8 | 620 | 2300 | 2190 | 5 | 96 |
| Comparative Example 3 | - | 1900 | 760 | 60 | 75 |
| Comparative Example 4 | 1100 | 730 | 600 | 18 | 78 |

In the proton-exchange membrane of Comparative Example 3 in which only the phosphorus-containing polymer compound was added by immersing in water of 80°C for 48 hours, elution of phosphorus was recognized. In the proton-exchange membranes of Examples 1 to 8 in which the phosphorus-containing polymer compound and the metallic element were added, elution of phosphorus was suppressed. In the proton-exchange membrane of Comparative Example 4 in which the low molecular weight phosphorus-containing compound and the metallic element were added, elution of phosphorus was not sufficiently suppressed. The Fenton's test of the membrane after the elution test was carried out. As a result, the proton-exchange membranes containing the metallic element added therein of Examples 1 to 8 showed high Fenton resistance as compared with the proton-exchange membrane containing no metallic element added therein of Comparative Example 3 and the proton-exchange membrane showing insufficient suppression of elution of Comparative Example 4. Thus, it is considered that long-term high oxidation resistance can be obtained by suppressing elution of the phosphorus-containing polymer compound through the addition of the metallic element.

With respect to the proton-exchange membranes obtained in examples and comparative examples, a power generation test was carried out. The results are shown in Table 5.

Table 5

| | Electric power (V) |
|---|---|
| Example 2 | 0.73 |
| Comparative Example 2 | 0.71 |

Electric power of Example 2 is equal to that of Comparative Example 2, and deterioration of cell performance by the addition of the phosphorus-containing polymer compound was not recognized.

As is apparent from the above-mentioned results, oxidation resistance is improved by mixing the polymer electrolyte with the phosphorus-containing polymer compound. It also became apparent that elution of the phosphorus-containing polymer compound is suppressed by adding the metallic element, in addition to the phosphorus-containing polymer compound. As described above, it is possible to obtain a solid polymer electrolyte composition having long-term oxidation resistance improved without impairing proton conductivity of the polymer electrolyte.

INDUSTRIAL APPLICABILITY

The present invention provides a solid polymer electrolyte composition having excellent durability, that can improve oxidation resistance without causing decrease in proton conductivity, elution of added components and the like, and an ion-exchange membrane, a membrane electrode assembly and a fuel cell, each using the electrolyte composition, and greatly contributes to the industrial field.

## Claims

1. A solid polymer electrolyte composition comprising 90 to 99.95 parts by mass of an aromatic hydrocarbon-based polymer electrolyte, 0.05 to 10 parts by mass of a phosphorus-containing polymer compound and 10 to 5,000 ppm of a metallic element.

2. The solid polymer electrolyte composition according to claim 1, wherein said aromatic hydrocarbon-based polymer electrolyte is composed of a polymer including at least one kind of a structural unit represented by Chemical Formula 1 shown below and at least one kind of a structural unit represented by Chemical Formula 2 shown below:

[Chemical Formula 1]

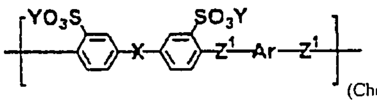
(Chemical Formula 1)

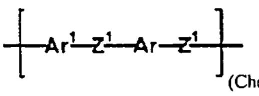
(Chemical Formula 2)

wherein, in Chemical Formulas 1 and 2, X represents a -S(=O)$_2$- group or a -C(=O)-group, Y represents H or a monovalent cation, $Ar^1$ represents one or more kinds of aromatic groups each having an electron withdrawing group, $Z^1$ represents either an oxygen atom or a sulfur atom, and Ar represents one or more kinds of groups selected from the group consisting of a divalent aromatic group and a divalent aliphatic group, respectively.

3. The solid polymer electrolyte composition according to claim 1 or 2, wherein said aromatic hydrocarbon-based polymer electrolyte is a block copolymer including a hydrophilic segment and a hydrophobic segment.

4. The solid polymer electrolyte composition according to any one of claims 1 to 3, wherein said phosphorus-containing polymer compound is a compound having a phosphonic acid group.

5. The solid polymer electrolyte composition according to any one of claims 1 to 4, wherein the elution amount of said phosphorus-containing polymer compound when said solid polymer electrolyte composition is immersed in water of 80°C for 48 hours is 10% by mass or less based on the content of said phosphorus-containing polymer compound.

6. The solid polymer electrolyte composition according to any one of claims 1 to 5, wherein said phosphorus-containing polymer compound is polyvinyl phosphonic acid.

7. The solid polymer electrolyte composition according to any one of claims 1 to 6, wherein said metallic element is at least one metallic element selected from the group consisting of Mg, Ca, Co, Ni, Zn, Sr, Zr, Ba and Ce.

8. An ion-exchange membrane comprising the solid polymer electrolyte composition according to any one of claims 1 to 7.

9. A membrane electrode assembly using the ion-exchange membrane according to claim 8.

10. A membrane electrode assembly comprising an electrode catalyst layer using the solid polymer electrolyte composition according to any one of claims 1 to 7.

11. A fuel cell using the membrane electrode assembly according to claim 9 or 10.

**INTERNATIONAL SEARCH REPORT**

International application No.
PCT/JP2010/060505

A. CLASSIFICATION OF SUBJECT MATTER
*H01B1/06*(2006.01)i, *B01J39/12*(2006.01)i, *B01J39/20*(2006.01)i, *B01J47/12* (2006.01)i, *C08K3/08*(2006.01)i, *C08L101/02*(2006.01)i, *C08L101/12*(2006.01)i, *C25B13/08*(2006.01)i, *H01M4/86*(2006.01)i, *H01M8/02*(2006.01)i,

According to International Patent Classification (IPC) or to both national classification and IPC

B. FIELDS SEARCHED

Minimum documentation searched (classification system followed by classification symbols)
H01B1/06, B01J39/12, B01J39/20, B01J47/12, C08K3/08, C08L101/02, C08L101/12, C25B13/08, H01M4/86, H01M8/02, H01M8/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2000-11756 A (Toyota Central Research and Development Laboratories, Inc.), 14 January 2000 (14.01.2000), entire text (Family: none) | 1-11 |
| Y | JP 2007-188706 A (Asahi Glass Co., Ltd.), 26 July 2007 (26.07.2007), entire text (Family: none) | 1-11 |
| Y | JP 2008-123974 A (Toyobo Co., Ltd.), 29 May 2008 (29.05.2008), entire text (Family: none) | 2-3 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 October, 2010 (01.10.10) | 19 October, 2010 (19.10.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No. PCT/JP2010/060505

C (Continuation). DOCUMENTS CONSIDERED TO BE RELEVANT

| Category* | Citation of document, with indication, where appropriate, of the relevant passages | Relevant to claim No. |
|---|---|---|
| A | JP 2003-528212 A (VICTREX MANUFACTURING LTD.), 24 September 2003 (24.09.2003), entire text & US 7125935 B2 & EP 1275164 A & WO 01/71839 A2 | 1-11 |
| A | JP 2001-223015 A (Toyota Central Research and Development Laboratories, Inc.), 17 August 2001 (17.08.2001), entire text & US 2001/38937 A1 & EP 1110992 A1 | 1-11 |
| A | JP 2002-343132 A (Toyota Central Research and Development Laboratories, Inc.), 29 November 2002 (29.11.2002), entire text (Family: none) | 1-11 |
| A | JP 2007-194121 A (Toyota Central Research and Development Laboratories, Inc.), 02 August 2007 (02.08.2007), entire text & WO 2007/83229 A2 | 1-11 |

Form PCT/ISA/210 (continuation of second sheet) (July 2009)

**INTERNATIONAL SEARCH REPORT**

International application No.
PCT/JP2010/060505

Continuation of A. CLASSIFICATION OF SUBJECT MATTER
(International Patent Classification (IPC))

*H01M8/10*(2006.01)i

(According to International Patent Classification (IPC) or to both national classification and IPC)

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000011755 A
- JP 2004079252 A
- JP 2000011756 A
- JP 2004134269 A
- JP 2003238678 A
- JP 2004175997 A
- JP 2002343132 A


### Non-patent literature cited in the description


- *J. Appl. Poly. sci.,* 1998, vol. 70, 1947